# NEUE EUROPÄISCHE PATENTSCHRIFT

(11) **EP 0 304 392 B2**
(45) Veröffentlichungstag und Bekanntmachung des Hinweises auf die Entscheidung über den Einspruch: **03.04.1996**
(45) Hinweis auf die Patenterteilung: 11.09.1991
(21) Anmeldenummer: 88730111.7
(22) Anmeldetag: 10.05.1988
(51) Int. Cl.: B65G 15/58, B65G 39/07, B65G 13/00

(54) **Vorrichtung zum Längstransport von Rundmaterial**
Device for longitudinal transport of round stock
Dispositif pour le transport longitudinal de ronds

(30) Priorität: 17.08.1987 DE 3727718
(43) Veröffentlichungstag der Anmeldung: 22.02.1989
(73) Patentinhaber: MANNESMANN Aktiengesellschaft, D-40027 Düsseldorf (DE)
(72) Erfinder: Adamitzki, Eberhard, D-4050 Mönchengladbach 6 (DE)
(74) Vertreter: Meissner, Peter E., Dipl.-Ing.

(56) Entgegenhaltungen:
- DE-A- 1 456 513
- DE-A- 3 311 227
- DE-B- 2 421 623
- DE-C- 873 817
- DE-C- 929 474
- DE-C- 3 403 388
- DE-U- 7 804 981

## Beschreibung

Die Erfindung betrifft eine Vorrichtung zum Längstransport von Rundmaterial, bei der das zu transportierende Material auf längs- oder drehbeweglichen Stützteilen liegt, die mit einer in der Längsmitte befindlichen Vertiefung ausgestattet sind.

Derartige Transportvorrichtungen sind z.B. bekannt aus DE-A-2421623 und DE-C-929474 und werden u.a. bei der Bearbeitung von Rohren zwischen den verschiedenen Bearbeitungsstationen verwendet.

Bisher hat man für derartige Zwecke entweder Rollgänge benutzt, deren Rollen mit einer V-förmigen Vertiefung in der Mitte ausgestattet sind oder es wurden zwei V-förmig zueinander geneigt angeordnete endlose Bänder verwendet, die das stabförmige Werkstück aufnehmen (DE-PS 2935612). Abgesehen von dem großen Aufwand, den derartige, V-förmig zueinander angeordnete umlaufende Bänder wegen der schrägstehenden Umlenkrollen erfordern und der schlechten Zugänglichkeit der Werkstücke, z.B. zum Herausnehmen innerhalb der Bandlänge, besteht der wesentliche Nachteil der bisher üblichen Transportvorrichtungen darin, daß der zwischen den Begrenzungen der Vertiefung gebildete Winkel unveränderlich festliegt und daher die Reibkraft bei gleichen Materialpaarungen und festem Winkel bei unterschiedlichen Außendurchmessern des Transportgutes nur von dessen Masse abhängt.

Bei dem Transport von Rundmaterial zwischen Bearbeitsstationen, z.B. Abstechanlage, Schopfeinrichtung, und dergleichen, kommt es aus Gründen der Wirtschaftlichkeit auf hohe Transportgeschwindigkeiten an. Das bedeutet, daß das Gut trotz hoher Beschleunigung vom Förderer mitgenommen werden muß und bei starker Verzögerung nicht auf der Abstützung rutschten darf. Gerade bei Rundmaterial mit kleinem Außendurchmesser und somit kleinem Gewicht werden die höchsten Transportgeschwindigkeiten und damit auch möglichst kurze Beschleunigung- und Bremsstrecken verlangt.

Die bekannten Transportvorrichtungen genügen nicht der Anforderung, insbesondere auch Rundmaterial mit kleinem Durchmesser problemlos zu beschleunigen und wieder abzubremsen, so daß es für den nächsten Bearbeitungsvorgang ohne besondere Ausrichtungsarbeit bereitsteht.

Es wurde nun gefunden, daß auf äußerst einfache Weise die Nachteile der bisher verwendeten Vorrichtungen vermieden werden können, wenn die der Aufnahme des Transportgutes dienende Vertiefung in der quer zur Transportrichtung verlaufenden Ebene nicht wie bisher von geradlinigen Konturen begrenzt wird, sondern wenn die Vertiefung von konvex gekrümmten, vom Grund der Vertiefung nach oben, außen verlaufenden Konturen begrenzt ist. Auf diese Weise verändert sich der Auflagewinkel bei kleinerem Außendurchmesser des Transportgutes, so daß sich ein höherer Keilreibungskoeffizient ergibt und ein Durchrutschen weder beim Beschleunigen noch beim Abbremsen auftritt.

Die Erfindung kann für die Gestaltung von angetriebenen Rollgangsrollen verwendet werden. In diesem Fall sind die konvex gekrümmten Konturen die Erzeugenden der Mantelfläche einer Transportrolle. Die Erfindung kann ebensogut bei einem Ketten- oder Bandförderer verwendet werden. In diesem Falle befindet sich die Vertiefung in einem prismatischen Stützteil, von dem eine Mehrzahl in Abständen hintereinander an einem endlosen umlaufenden Transportelement befestigt sind.

Die Erfindung wird nachfolgend anhand eines in der Zeichnung wieder gegebenen Ausführungsbeispiels näher erläutert.

Es zeigt :
- Figur 1: eine Vorderansicht eines erfindungsgemäßen Stützteils,
- Figur 2: eine Ansicht einer erfindungsgemäß gestalteten Rollgangsrolle,
- Figur 3: eine schematische Seitenansicht eines Bandförderers und
- Figur 4: einen Schnitt durch den oberen Teil des Förderers nach Figur 3.

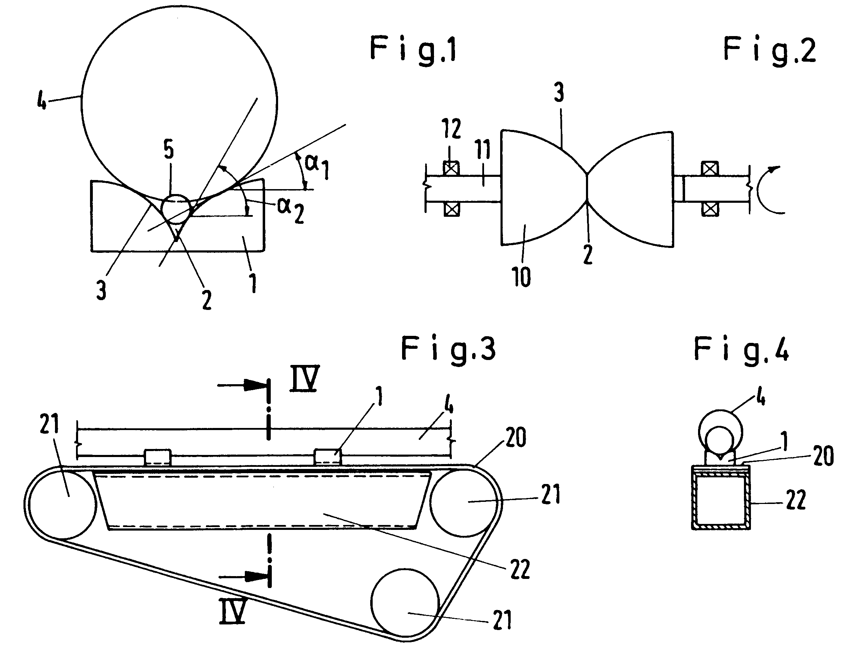

In Figur 1 ist in vergrößertem Maßstab ein prismatisches Stützteil 1 dargestellt, wie es gemäß Figur 3 in Abständen hintereinander auf einem endlosen umlaufenden Band 20 befestigt ist. Das prismatische Stützteil 1 ist in seiner Längsmitte mit einer Vertiefung versehen, die, vom Grund 2 der Vertiefung ausgehend, von konvex nach oben außen verlaufenden Konturen 3 begrenzt wird.

Wie aus Figur 1 ersichtlich, liegt ein rundes Werkstück 4, welches einen verhältnismäßig großen Durchmesser aufweist, mit dem Auflagewinkel α 1 auf dem Stützteil auf, also mit einem relativ kleinen Auflagewinkel. Das Rundmaterial 5 dagegen, welches einen wesentlich kleineren Durchmesser aufweist, liegt tiefer in der Vertiefung und wird auf Grund des wesentlich größeren Auflagewinkels α 2 deshalb ausreichend fest in dem Stützteil gehalten, weil sich ein höherer Keilreibungskoeffizient ergibt. Dadurch wird das Durchrutschen beim Beschleunigen und Abbremsen von im Durchmesser kleineren Werkstücken, die gerade mit besonders hoher Geschwindigkeit zwischen Bearbeitungsstationen transportiert werden sollen, vermieden.

Figur 2 zeigt eine angetriebene Rollgangsrolle 10, die entsprechend der Kontur des Stützteiles 1 als Rotationskörper ausgestaltet ist. In der Zeichnung ist bei 2 wiederum der Grund der Vertiefung dargestellt, 3 ist die vom Grund der Vertiefung nach oben außen verlaufende konvexe Kontur, 11 ist die Welle der Rolle und 12 sind die Lager derselben.

Bei der Längstransportvorrichtung nach Figur 3 handelt es sich um ein endloses, umlaufendes Band 20, das über drei Umlenkrollen 21 geführt ist, von denen mindestens eine angetrieben ist. Vorteilhaft ist es, das Band aus Kunststoff herzustellen und nach Art eines Zahnriemens zu gestalten. Auf dem Band sind in Abständen prismatische Stützteile 1, wie sie in Figur 1 dargestellt sind, befestigt, auf denen die zu transportierenden runden Werkstücke aufliegen. Das Band ist üblicherweise in regelmäßigen Abständen mit Stützteilen 1 versehen ; sie sind nur im Bereich des Transportguts 4 dargestellt. Zur Aufnahme des Werkstückgewichts zwischen den oberen Rollen 21 wird ein mit einer oberen Gleitfläche versehener Stützträger 22 verwendet.

Figur 4 zeigt einen Schnitt durch Figur 3 auf der Linie IV-IV. Gleiche Bauteile sind in Figur 4 mit den gleichen Positionsziffern wie in Figur 3 angegeben.

## Patentansprüche

1. Vorrichtung zum Längstransport von Rundmaterial, bei der das zu transportierende Material auf einteiligen längs- oder drehbeweglichen Stützteilen (1, 10) liegt, die mit einer in der Längsmitte befindlichen Vertiefung ausgestattet sind,
**dadurch gekennzeichnet,**
daß jedes Stützteil (1, 10) in der quer zur Transportrichtung verlaufenden Ebene von konvex gekrümmten, vom Grund (2) der Vertiefung nach oben, außen verlaufenden Konturen (3) begrenzt ist.

2. Vorrichtung nach Anspruch 1, dadurch gekennzeichnet, daß die konvex gekrümmten Konturen (3) die Erzeugenden der Mantelfläche einer Transportrolle (10) sind.

3. Vorrichtung nach Anspruch 1, dadurch gekennzeichnet, daß die Vertiefung in einem prismatischen Stützteil (1) angeordnet ist, von dem eine Mehrzahl in Abständen hintereinander an einem endlosen umlaufenden Transportelement, z.B. einem Band (20) befestigt sind.

4. Vorrichtung nach den Ansprüchen 1 und 3, dadurch gekennzeichnet, daß das Band (20) nach Art eines Zahnriemens ausgestaltet ist.

5. Vorrichtung nach den Ansprüchen 1, 3 und 4, dadurch gekennzeichnet, daß die Stützteile (1) Formstücke aus Kunststoff sind.

6. Vorrichtung nach den Ansprüchen 1 bis 5, dadurch gekennzeichnet, daß die die Vertiefung begrenzenden Konturen (3) Kreisbogenstücke sind.

7. Vorrichtung nach den Ansprüchen 1 bis 5, dadurch gekennzeichnet, daß die die Vertiefung begrenzenden Konturen (3) Ellipsenabschnitte sind.

## Claims

1. Apparatus for the longitudinal transportation of round material, in which the material which is to be transported lies on longitudinally or rotationally movable one-piece supporting sections (1, 10) which are equipped with an indentation located in the longitudinal centre,
characterised in that
each supporting section (1, 10) in the plane running transversely to the direction of transportation is delimited by convex curved profiles (3) which run upwards and outwards from the base (2) of the indentation.

2. Apparatus according to claim 1,
characterised in that
the convex curved profiles (3) are the generatrices of the casing surface of a transportation roller (10).

3. Apparatus according to claim 1,
characterised in that
the indentation is located in a prismatic supporting section (1), a plurality of which are attached, spaced one behind the other, to an endless circulatin transportation element, e.g. a belt (20).

4. Apparatus according to claims 1 and 3,
characterised in that
the belt (20) is formed in the manner of a toothed belt.

5. Apparatus according to claims 1, 3 and 4,
characterised in that
the supporting sections (1) are shaped pieces made of plastic.

6. Apparatus according to claims 1 to 5,
characterised in that
the profiles (3) delimiting the indentation are sections of an arc of a circle.

7. Apparatus according to claims 1 to 5,
characterised in that
the profiles (3) delimiting the indentation are sections of an ellipse.

## Revendications

1. Dispositif pour le transport longitudinal de matériaux ronds, dans lequel le matériau à transporter se trouve sur des pièces de support en une pièce (1,10) rotatives ou mobiles longitudinalement, dans lesquelles est prévu un évidement s'étendant longitudinalement au centre,
caractérisé en ce que chaque pièce de support (1,10) est limitée, dans le plan s'étendant transversalement à la direction de transport, par des contours convexes (3), s'étendant vers l'extérieur, du fond (2) de l'évidement vers le haut.

2. Dispositif selon la revendication 1,
caractérisé en ce que les contours convexes (3) sont les génératrices de la surface d'enveloppe d'un rouleau de transport (10).

3. Dispositif selon la revendication 1,
caractérisé en ce que l'évidement est agencé dans une pièce de support prismatique (1), dont une pluralité est fixée à un élément de transport rotatif sans fin, par exemple une courroie (20), de façon espacée l'une derrière l'autre.

4. Dispositif selon les revendications 1 et 3,
caractérisé en ce que la courroie (20) est réalisée sous forme d'une courroie crantée.

5. Dispositif selon les revendications 1, 3 et 4,
caractérisé en ce que les pièces de support (1) sont des pièces moulées en matière synthétique.

6. Dispositif selon les revendications 1 à 5,
caractérisé en ce que les contours (3) limitant l'évidement sont des arcs de cercle.

7. Dispositif selon les revendications 1 à 5,
caractérisé en ce que les contours (3) limitant l'évidement sont des tronçons d'ellipse.
